Europäisches Patentamt

European Patent Office

Office européen des brevets

(19)

(11) Veröffentlichungsnummer: **0 142 140**

**A2**

(12) **EUROPÄISCHE PATENTANMELDUNG**

(21) Anmeldenummer: **84113528.8**

(22) Anmeldetag: **09.11.84**

(51) Int. Cl.⁴: **B 24 D 11/06**
**F 16 G 3/10**

(30) Priorität: **09.11.83 DE 3340432**

(43) Veröffentlichungstag der Anmeldung:
**22.05.85 Patentblatt 85/21**

(84) Benannte Vertragsstaaten:
**AT BE CH DE FR GB IT LI LU NL SE**

(71) Anmelder: **Norddeutsche Schleifmittel-Industrie**
**Christiansen & Co. (GmbH & Co.)**
**Luruper Hauptstrasse 106-122**
**D-2000 Hamburg 53(DE)**

(72) Erfinder: **Toillié, Eberhard, Dipl.-Ing.**
**Pastorendamm 28 a**
**D-2082 Tornesch(DE)**

(74) Vertreter: **Glawe, Delfs, Moll & Partner Patentanwälte**
**Postfach 26 01 62 Liebherrstrasse 20**
**D-8000 München 26(DE)**

(54) **Schleifband mit einer durch ein Kunstharzband überbrückten Verbindungsstelle.**

(57) Schleifband mit einer durch ein verstärkende Fasern enthaltendes Kunstharzband überbrückten Verbindungsstelle. Gute Längsfestigkeit trotz begrenzter Dicke des Kunstharzbandes wird durch eine Wirrfaserverstärkung desselben erreicht.

Fig.10

Glawe, Delfs, Moll & Partner - p 10963/83 - Seite

_1_

Beschreibung

Die Erfindung bezieht sich auf ein Schleifband mit einer durch ein verstärkende Fasern enthaltendes Kunstharzband überbrückten Verbindungsstelle.

Endlose Schleifbänder werden durch Verbinden der Enden eines Schleifbandstücks hergestellt. Die Verbindung muß eine hinreichende Festigkeit und Formbeständigkeit aufweisen, ohne die Eigenschaften des Bandes an der Verbindungsstelle wesentlich zu ändern. Insbesondere darf die Verbindungsstelle nicht oder nicht wesentlich dicker als das sonstige Schleifband sein. Bekannt ist die Verbindung der Schleifbandenden durch ein die Verbindungsstelle überbrückendes Kunstharzband, das mit den benachbarten Rändern der Schleifbandrückseite verklebt ist (DE-OS 24 50 775). Es ist bekannt, dieses Band mit Gewebe auszurüsten, um ihm größere Festigkeit zu verleihen und ggf. auch

-2-

eine Herabsetzung seiner Dicke gegenüber unverstärktem
Kunstharzband zu ermöglichen (DE-OS 20 22 316; DE-OS 24 52 589).
Im allgemeinen wählt man für die Richtung der Verbindung eine
von der Bandquerrichtung abweichende Richtung in Gestalt einer
sog. Schrägstoßverbindung. Dadurch soll vermieden werden, daß
die Verbindungsstelle über die gesamte Bandbreite gleichzeitig auf einer Umlenkrolle aufläuft, was nicht nur zu einer
beträchtlichen Geräuschbelästigung führen kann, sondern auch
die Bearbeitungsqualität und die Haltbarkeit des Schleifbands
verringert. Entsprechend schräg verläuft auch das die Verbindungsstelle überbrückende Kunstharzband. Wenn die Fadenrichtung des darin enthaltenen Verstärkungsgewebes mit der
Längsrichtung des Kunstharzbandes übereinstimmt, was für die
Herstellung am einfachsten ist, so verlaufen die Gewebefäden
schräg zur Längsrichtung des Schleifbandes und damit auch
schräg zur Hauptbeanspruchungsrichtung der Verbindung, was zu
unerwünschten Dehnungen und Festigkeitseinbußen führen kann.
Man kann das Gewebe in dem Kunstharzband auch so anordnen, daß
seine Fäden in Schleifbandlängsrichtung verlaufen; dies setzt
jedoch voraus, daß das Kunstharzband aus einem größeren Stück
gewebeverstärkter Kunststoffolie schräg geschnitten wird unter
einem Winkel, der der Schrägungsrichtung der Schleifbandverbindung entspricht. Dies ist materialaufwendig und umständlich
und demzufolge kostspielig. Das gilt auch für eine Schleifbandverbindung, die in einer Richtung orientierte Verstärkungsfasern enthält (US-PS 4 215 516). - Wenn man zur Vermeidung der
mit der Verwendung von Gewebeverstärkung verbundenen Nachteile
unverstärktes Kunstharzband verwendet, so muß man zur Erzielung
der erforderlichen Festigkeit dies in größerer Dicke verwenden,
was in vielen Fällen nicht statthaft ist.

Der Erfindung liegt daher die Aufgabe zugrunde, ein Schleifband der eingangs genannten Art bzw. ein Kunstharz-

- 3 -

band zum Verbinden von dessen Enden bzw. ein Verfahren zur
Herstellung eines solchen Schleifbandes zu schaffen, die
bei geringer Dicke des Kunstharzbandes unabhängig vom
Schrägungswinkel der Schleifbandverbindung hohe Festigkeit
mit geringer Verdickung der Verbindungsstelle verbinden.

Die erfindungsgemäße Lösung besteht darin, daß die das
Kunstharzband verstärkenden Fasern zu einem wesentlichen
Anteil wirr orientiert sind.

Auf den ersten Blick scheint die Lösung in Gegensatz zu
stehen zu der Erfahrung, daß bei einer Gewebeverstärkung
mit winklig zur Bandlängsrichtung verlaufenden Fäden keine
hinreichenden Festigkeiten und Dehnungswerte erreicht
werden, denn auch bei wirrer Anordnung der Verstärkungsfasern ist damit zu rechnen, daß der größte Teil der Fasern
winklig zur Bandlängsrichtung verläuft. Jedoch hat die Erfindung erkannt, daß bei bekannten gewebeverstärkten Kunstharzbändern die Festigkeit des Gewebes, in Fadenlängsrichtung gemessen, im allgemeinen wesentlich höher ist als
dies für die Verbindungszwecke erforderlich ist und als
an Kräften auf die verstärkenden Fäden durch das sie enthaltende Kunstharzmaterial des Bandes bzw. durch den das
Kunstharzband mit der Schleifbandrückseite verbindenden Kleber
übertragen werden kann. Dies führt zu dem Schluß, daß auch
eine wesentlich geringere Anzahl von in Bandlängsrichtung
verlaufenden Fasern zu einer hinreichenden Verstärkung
führen kann. - · Ferner beinhaltet die Erfindung die Erkenntnis, daß die wirre Anordnung der Verstärkungsfasern die
Kraftübertragung auf denjenigen (an sich kleinen) Anteil
der Fasern erleichtert, die in Bandlängsrichtung verlaufen.

Bei einer Wirrfaseranordnung ist nämlich jede einzelne Faser
innerhalb der sie umgebenden Matrix infolge ihrer Krümmungen
und der Vielzahl gleichmäßig verteilter Faserkreuzungspunkte
sicherer verankert als die einzelnen Fasern eines gerade
durchlaufenden Fadens, von dem höchstens die außenliegenden
Fasern (und auch diese oft nur teilweise) einen direkten Verbund mit dem umgebenden Kunstharz aufzuweisen haben. Demzufolge
wird jede einzelne in Schleifbandlängsrichtung verlaufende
Verstärkungsfaser bei wirrer Anordnung wesentlich stärker an
der Kraftübertragung beteiligt als in einer Fadengewebeanordnung. Auch dies ist eine Erklärung dafür, daß bei einer Wirrfaseranordnung  die Zahl der in Schleifbandlängsrichtung verlaufenden Fasern zur Erreichung hinreichender Verbindungsfestigkeit bei weitem nicht so groß zu sein braucht wie im
Falle einer Gewebeverstärkung. - Schließlich kann die Eignung
eines wirrfaserverstärkten Kunststoffbandes zur erhöhten Kraftaufnahme in jeder beliebigen Richtung bei Schleifbandverbindungen auch deshalb besonders vorteilhaft sein, weil Schleifbänder allgemein und demzufolge auch deren Verbindungsstellen
beim Schleifen gewölbter Gegenstände häufig Kräften ausgesetzt
werden, die nicht nur in Längsrichtung verlaufen. - Besonders
wertvoll ist die Eignung von wirrfaserverstärkten Kunstharzbändern bei solchen Schleifbandverbindungen, deren Fuge nicht
gerade, sondern wellenförmig gezackt oder gefingert ineinandergreifend verläuft, weil bei diesen die durch das überbrückende
Kunstharzband zu übertragenden Kräfte je nach örtlicher Richtung
der Fuge unterschiedlich gerichtet sein können.

Es ist zwar bekannt (GB-PS 1 457 986),eine Verstärkungsschicht auf
die Rückseite eines Schleifbands aufzubringen, die als druckempfindliches Band ausgebildet ist und wirr orientierte Fasern
enthält; jedoch dient diese Verstärkungsschicht nicht zur Verbindung der Schleifbandenden an der Stoßstelle. Sie soll in
erster Linie die Reibeigenschaften bezüglich der Mitnahme des
Schleifbands an der angetriebenen Rolle verbessern. Darüber hinaus verbessert sie auch - wie jede zusätzliche Schicht, welcher Art sie auch sei - die Zugfestigkeit des Bandes insgesamt. Jedoch ließ sich daraus nicht entnehmen, daß ein Kunstharzband, das wirr orientierte Fasern enthält, sich allein für die hochbeanspruchte Stoßverbindung eines Schleifbandes eignen würde, nachdem zuvor alle Versuche auf die Verwendung von orientierten Fasern gerichtet gewesen waren.

Unter Kunstharz ist im Zusammenhang der Verbindung jeder synthetische, polymere Werkstoff zu verstehen, der sich in Bandform zur kraftübertragenden Fugenüberbrückung sowie zur Einbettung von Fasermaterial eignet. In erster Linie kommen beispielsweise Polyester, Polyamide und Polyimide in Frage. Asl Fasermaterial eignen sich vornehmlich Glas, Kohlenstoff und hochfeste Kunstharze wie Aramid, aber auch mineralische und metallische Fasern. Ihre Länge liegt vorzusweise im Bereich vom 0,3-50 mm. Der Titer wird zweckmäßigerweise zwischen 2 den und 80 den gewählt. Die Wahl der Faserlängen und -dicken ist selbstverständlich auch bis zu einem gewissen Grade von der Dicke der verwendeten Bandfolie abhängig, die zweckmäßigerweise zwischen 0,025 mm und 0,35 mm liegt.

Es ist zweckmäßig, wenn die Verstärkungsfasern in dem Kunstharzband im wesentlichen gleichmäßig verteilt sind. Ein Band mit im wesentlichen gleichmäßig über den Querschnitt verteilten Verstärkungsfasern kann beispielsweise durch Extrusion oder Gießen von die Fasern enthaltendem, schmelzflüssigem Kunstharz erhalten werden. Wenn sich infolge der Strömungsvorgänge in der Düse eine gewisse Querorientierung der Fasern einstellt, so muß dies nicht unbedingt nachteilig sein, weil zum einen ein hinreichender Anteil auch noch anders orientierter Fasern verbleibt und zum anderen ein Übergewicht der quer orientierten Fasern im Hinblick auf die überwiegend quer verlaufende Beanspruchung des Kunstharzbandes durchaus zweckmäßig sein kann. Im übrigen kann eine solche überwiegende Querorientierung durch Nachbearbeitungsverfahren, die zu einer Vermehrung der Längsorientierung neigen, wie z.B. Kalandrieren, kompensiert werden.

Zweckmäßig kann auch eine solche Ausführungsform sein, bei welcher die Faserns in dem Kunstharzband überwiegend auf dessen dem Schleifband zugekehrten Querschnittseite angeordnet sind, damit die Verbindungskräfte über einen geringeren Dickenbereich des Kunstharzbandes in Form von Schubspannungen übertragen werden müssen. Zum einen ergibt dies größere Sicherheit; zum anderen geringere Dehnung.

Nach einem besonderen Merkmal der Erfindung können die Verstärkungsfasern an der dem Schleifband zugekehrten Oberfläche des Kunstharzbandes wenigstens teilweise frei liegen. Dadurch kann nämlich die Festigkeit der Verbindung des Kunstharzbandes mit einer zwischen diesem und der Schleifbandrückseite befindlichen Bindemittelschicht verbessert werden. Besonders in diesem Zusammenhang bietet sich ein schichtförmiger Aufbau des Kunstharzbandes an, der aber auch in anderem Zusammenhang Vorteile haben kann.

Wie an sich bekannt, kann das Kunstharzband mit den benachbarten Rändern der zu verbindenden Schleifbandenden verklebt sein. Dafür können die im Stand der Technik bewährten Kleber verwendet werden.

Alternativ kann auch das vorgefertigte Kunstharzband im nicht ausgehärteten Zustand auf das ggf. mit einem Haftvermittler oder Haftmittel versehene Schleifband aufgepreßt und aushärten gelassen werden. Beispielsweise kann nicht oder nur teilweise polymerisiertes Kunstharz verwendet werden. Es kann auch bei Verwendung eines thermoplastischen Werkstoffs schmelzflüssig aufgetragen werden. Bei schichtweisem Aufbau des Kunstharzbandes besteht auch die Möglichkeit, daß sich der nicht ausgehärtete Zustand beim Auftrag des Bandes nur auf dessen dem Schleifband zugewendete Schicht bezieht. Ein besonderer Vorteil dieses Verfahrens besteht nicht nur darin, daß sich eine innige Verbindung zwischen
Kunstharzband und Schleifbandrückseite , ggf. ohne dickere
Bindemittelschichten, erzielen läßt, sondern daß in vielen
Fällen auch noch eine Querschnittsformung des Bandes stattfinden kann. Wenn beispielsweise die an die Fuge angrenzenden
Ränder keilförmig angeschliffen sind, kann das überlappende
Band in die dadurch gebildete flache Höhlung eingepreßt
werden. so daß es einen komplementär doppelt keilförmigen
Querschnitt erhält. - Bei diesem Verfahren kann von einem
vorgeformten Band ausgegangen werden, das im plastischen
Zustand auf die Verbindungsstelle aufgelegt und dann angepreßt wird. Statt dessen kann es auch ohne Vorformung unmittelbar aus einer Düse im plastischen Zustand aufgebracht,
verteilt und - mit oder ohne Druckanwendung - aushärten
gelassen werden.

Schließlich besteht eine Möglichkeit zur Aufbringung des
Kunstharzbandes auf der Rückseite des Schleifbandes darin,
daß das Kunstharzband auf dem Schleifband schichtweise
aufgebaut wird, indem in eine zunächst aufgetragene,
plastische Kunstharzschicht ein Wirrvlies zumindest teilweise eingepreßt wird, wonach man die Kunstharzschicht erhärten läßt. Es können auch noch eine oder mehrere weitere
Schichten, die letzte als Deckschicht, aufgebracht werden.

In jedem Falle können die Fasern vliesförmig vorgeformt oder
auch lose eingestreut werden.

Schematische Ausführungsbeispiele werden im folgenden anhand
der Zeichnung erläutert. Darin zeigen:

| Fig. 1 | eine perspektivische Ansicht eines endlosen Schleifbandes, |
|---|---|
| Fig. 2 und 3 | zwei Draufsichten unterschiedlich gestalteter Verbindungsstellen, |
| Fig. 4 | einen Längsschnitt durch eine Verbindungsstelle, |
| Fig. 5, 6 und 7 | Draufsichten auf wirrfaserverstärkte Kunstharzbänder, |
| Fig. 8 und 9 | Querschnitte durch unterschiedliche Ausführungsformen solcher Kunstharzbänder und |
| Fig. 10 und 11 | Längsschnitte durch unterschiedliche Ausführungsformen von Verbindungsstellen. |

Das Schleifband 1, das über Umlenkrollen 2 läuft, ist aus dem ursprünglich gestreckten Zustand durch Verbindung seiner Enden im Bereich der Verbindungsstelle 3 endlos. Die Verbindungsstelle 3 verläuft schräg in einem Winkel 4 gegenüber der Schleifbandquerrichtung.

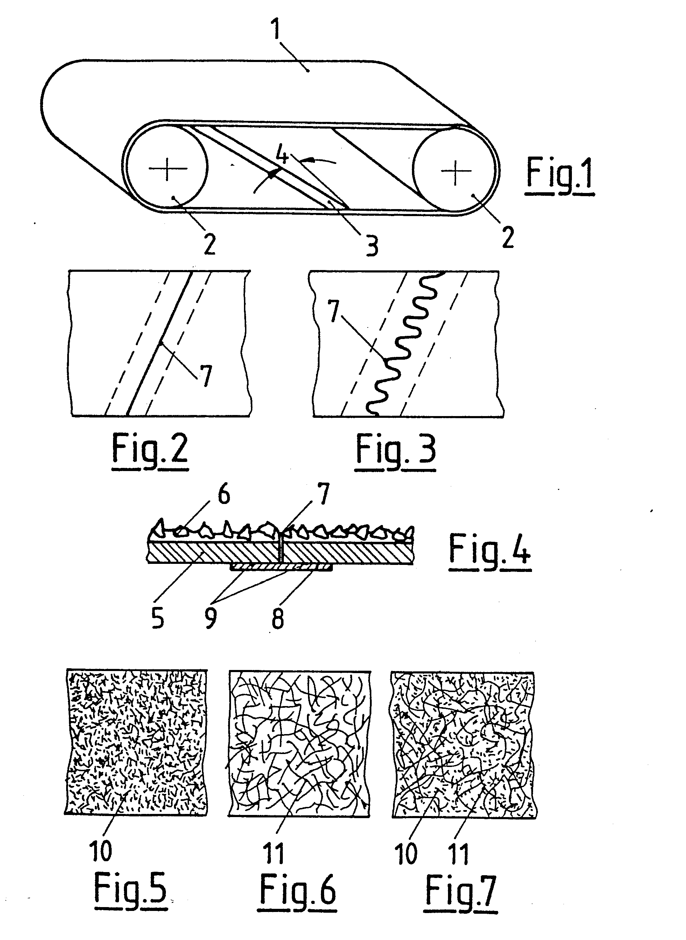

Gemäß Fig. 2 bzw.3 kann die Fuge 7 der Verbindungsstelle geradlinig oder nicht geradlinig verlaufen; gezeigt ist in Fig. 3 eine Wellenschnittverbindung.

Gemäß Fig. 4 besteht das Schleifband aus der zugfesten, flexiblen Unterlage 5 und dem Schleifkornbelag 6. Bei 7 erkennt man die Fuge zwischen den zu verbindenden Bandenden.

Die Verbindung wird vermittelt durch das Kunstharzband 8,
das mit den benachbarten Rändern 9 der Schleifbandrückseite beispielsweise zur Klebung verbunden ist.

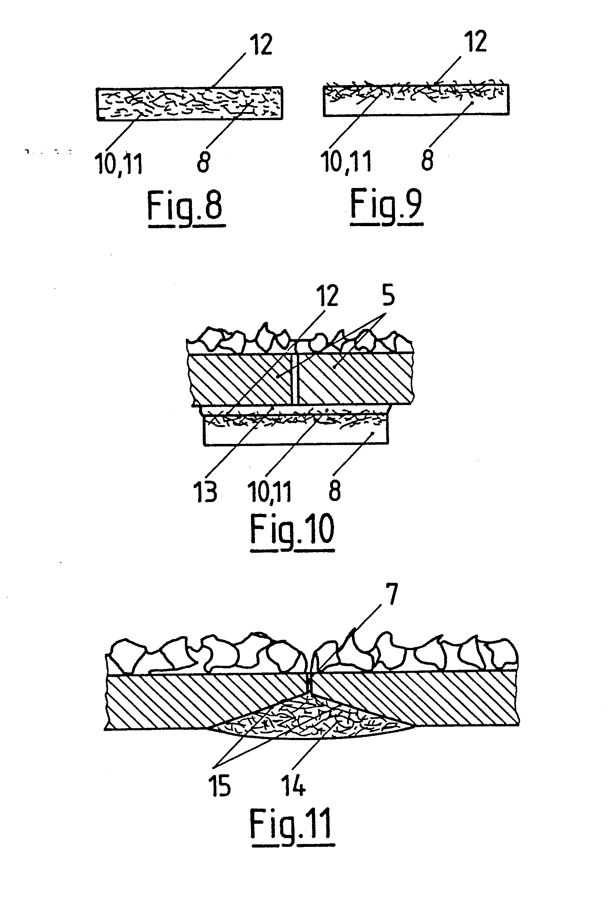

Das Kunstharzband 8 enthält Verstärkungsfasern, die kurz
gehackt sein können, wie dies bei 10 in Fig. 5 schematisch
(wenn auch viel zu grob) dargestellt ist, oder auch sehr
lang sein können, wie dies Fig. 6 bei 11 veranschaulicht.
Die Verstärkungsfasern können aber auch aus kurzen bis
langen Fasern 10,11 gemischt sein, wie dies in Fig. 7
gezeigt ist. Gemäß Fig. 8 können die Fasern 10,11 gleichmäßig über den gesamten Querschnitt des übertrieben dick gezeichneten Kunstharzbandes 8 verteilt sein. Gemäß Fig. 9
können sie aber auch eine höhere Konzentration, insbesondere
schichtförmig, in der Nähe derjenigen Oberfläche 12 des
Kunstharzbandes aufweisen, die zur Verklebung mit der Rückseite des Schleifbandes bestimmt ist.

Vorzugsweise sind die Verstärkungsfasern überwiegend in der
Ebene des Kunstharzbandes orientiert, was sich beispielsweise
durch Dehnung des Bandes nach dem Gießen in Längs- und/oder
Querrichtung bewerkstelligen läßt.

Wenn die Fasern 10, 11 gemäß Fig. 10 über die Oberfläche 12
hinausstehen oder mindestens teilweise in dieser frei liegen,
können sie eine innige Verbindung mit der Bindemittelschicht 13
eingehen, die in dem dargestellten Beispiel zwischen der Rückseite der Schleifbandunterlage 5 und dem Kunstharzband 8
vorgesehen ist.

In dem Beispiel gemäß Fig. 11 ist das Kunstharzband 14 in
die Vertiefung eingeformt, die durch keilförmige Anschrägung
der Ränder 15 der zu verbindenden Schleifbandenden geformt
wurde.

GLAWE, DELFS, MOLL & PARTNER

PATENTANWÄLTE
ZUGELASSENE VERTRETER BEIM EURO( **0142140**

RICHARD GLAWE
DR.-ING.

KLAUS DELFS
DIPL.-ING.

ULRICH MENGDEHL
DIPL.-CHEM. DR. RER. NAT

WALTER MOLL
DIPL.-PHYS. DR. RER. NAT.
ÖFF. BEST. DOLMETSCHER

HEINRICH NIEBUHR
DIPL.-PHYS. DR. PHIL. HABIL.

8000 MÜNCHEN 26
POSTFACH 162
LIEBHERRSTR. 20
TEL. (0 89) 22 65 48
TELEX 5 22 505 SPEZ
TELECOPIER (0 89) 22 39 38

2000 HAMBURG 13
POSTFACH 25 70
ROTHENBAUM-
CHAUSSEE 58
TEL. (040) 4 10 20 08
TELEX 21 29 21 SPEZ

Norddeutsche
Schleifmittel-Industrie
Christiansen & Co   (GmbH & Co),
Hamburg

Schleifband mit einer durch
ein Kunstharzband überbrückten Verbindungsstelle

HAMBURG

p 10963/83
D/be

Patentansprüche

1.  Schleifband mit einer durch ein verstärkende Fasern
    enthaltendes Kunstharzband überbrückten Verbindungsstelle, dadurch gekennzeichnet, daß die verstärkenden
    Fasern (10,11)  zu einem wesentlichen Anteil wirr
    orientiert sind.

2.  Schleifband nach Anspruch 1,  dadurch gekennzeichnet,
    daß die Fasern (10,11)  in dem Kunstharzband im
    wesentlichen gleichmäßig verteilt sind.

3.  Schleifband nach Anspruch 1,  dadurch gekennzeichnet,
    daß die Fasern (10,11)  in dem Kunstharzband überwiegend
    auf dessen dem Schleifband (1)  zugekehrten Querschnitt-
    seite angeordnet sind.

...2

BANK: DRESDNER BANK, HAMBURG, 4 030 448 (BLZ 200 800 00) · POSTSCHECK: HAMBURG 1476 07-200 (BLZ 200 100 20) · TELEGRAMM: SPECHTZIES

**0142140**

-2-

4. Schleifband nach Anspruch 3, dadurch gekennzeichnet, daß die an der dem Schleifband (1) zugekehrten Oberfläche (12) des Kunstharzbandes (8) teilweise freiliegenden Fasern (10,11) mit einer das Kunstharzband (8) mit dem Schleifband (1) verbindenden Bindemittelschicht (13) verbunden sind.

5. Kunstharzband mit verstärkenden Fasern zum Überbrücken der Verbindungsstelle eines Schleifbandes, dadurch gekennzeichnet, daß die Fasern (10,11) zu einem wesentlichen Anteil wirr orientiert sind.

6. Kunstharzband nach Anspruch 5, dadurch gekennzeichnet, daß die Fasern (10,11) im wesentlichen gleichmäßig über die Dicke des Kunstharzbandes verteilt sind.

7. Kunstharzband nach Anspruch 5, dadurch gekennzeichnet, daß die Fasern (10,11) im wesentlichen schichtförmig in bzw. an dem Werkstoff des Kunstharzbandes (8) angeordnet sind.

8. Kunstharzband nach Anspruch 7, dadurch gekennzeichnet, daß die Fasern (10,11) überwiegend in bzw. an der mit dem Schleifband (1) zu verbindenden Querschnittseite (12) des Kunstharzbandes (8) angeordnet sind.

9. Kunstharzband nach Anspruch 8, dadurch gekennzeichnet, daß die Fasern (10,11) an der mit dem Schleifband (1) zu verbindenden Seite (12) teilweise frei liegen.

10. Verfahren zum Herstellen eines Schleifbandes nach einem der Ansprüche 1 bis 4, dadurch gekennzeichnet, daß das vorgefertigte Kunstharzband mit dem Schleifband verklebt wird.

11. Verfahren zum Herstellen eines Schleifbandes nach einem der Ansprüche 1 bis 4, dadurch gekennzeichnet, daß das vorgefertigte Kunstharzband im nicht ausgehärteten Zustand auf das ggf. mit einem Haftvermittler oder Haftmittel versehene Schleifband aufgepreßt und aushärten gelassen wird.

12. Verfahren nach Anspruch 11, dadurch gekennzeichnet, daß das thermoplastische Kunstharzband im heißplastischen Zustand aufgetragen und erstarren gelassen wird.

13. Verfahren nach Anspruch 11 oder 12, dadurch gekennzeichnet, daß das Kunstharzband im noch nicht oder nur teilweise polymerisierten Zustand aufgetragen wird.

14. Verfahren nach einem der Ansprüche 10 bis 13, dadurch gekennzeichnet, daß das Kunstharzband auf das Schleifband aufextrudiert und durch Druckanwendung angeformt wird.

15. Verfahren zum Herstellen eines Schleifbandes nach einem der Ansprüche 1 bis 4, dadurch gekennzeichnet, daß das Kunstharzband auf dem Schleifband schichtweise aufgebaut wird, indem in eine zunächst aufgetragene plastische Kunstharzschicht ein Wirrvlies zumindest teilweise eingepreßt und die Kunstharzschicht erhärten gelassen wird.

Fig.1

Fig.2

Fig.3

Fig.4

Fig.5

Fig.6

Fig.7

0142140

12

10,11      8

## Fig.8

12

10,11      8

## Fig.9

12      5

13    10,11    8

## Fig.10

7

15      14

## Fig.11